# EUROPÄISCHE PATENTANMELDUNG

(11) **EP 2 177 355 A2**
(43) Veröffentlichungstag der Anmeldung: **21.04.2010**
(21) Anmeldenummer: 09013208.5
(22) Anmeldetag: 20.10.2009
(51) Int. Cl.: B32B 37/22

(54) **Verfahren zum Herstellen einer Trägerplatte und Trägerplatte**

(30) Priorität: 20.10.2008 DE 102008052155
(71) Anmelder: Ficotec Veredelungs GmbH, 93055 Regensburg (DE)
(72) Erfinder: Schlüter, Heiko, 93055 Regensburg (DE); Schlüter, Moritz, 93055 Regensburg (DE); Schlüter, Alex, 93055 Regensburg (DE)
(74) Vertreter: Patentanwaltskanzlei WILHELM & BECK

(57) **Zusammenfassung**

Es wird ein Verfahren zum Herstellen einer Trägerplatte, insbesondere eine Trägerplatte für Fliesenkleber oder Wandputz beschrieben, wobei eine Platte bereitgestellt wird, wobei zwei Rollen von Trägermaterial bereitgehalten werden, wobei zwei Bahnen von Trägermaterial von den zwei Rollen abgerollt werden, wobei die zwei Bahnen auf die Platte beidseits aufgelegt und mit der Platte verklebt werden.

## Beschreibung

Die Erfindung betrifft ein Verfahren zum Herstellen einer Trägerplatte gemäß Patentanspruch 1 und eine Trägerplatte gemäß Patentanspruch 13 und 14.

Trägerplatten sind in den verschiedenen Formen, beispielsweise als Bauplatte als Träger für eine Flächenbekleidung aus Keramikfliesen bekannt, wie in DE 20 2007 008 309 U1 beschrieben ist. Weiterhin ist aus der Offenlegungsschrift DE 27 134 87 A1 eine Isolier-PutzTrägerplatte bekannt.

Die Aufgabe der Erfindung besteht darin, ein verbessertes Verfahren zum Herstellen einer Trägerplatte und eine verbesserte Trägerplatte bereitzustellen.

Die Aufgabe der Erfindung wird durch das Verfahren gemäß Anspruch 1, durch die Trägerplatte gemäß Anspruch 13 und durch die Trägerplatte gemäß Anspruch 14 gelöst.

Weitere vorteilhafte Ausführungsformen der Erfindung sind in den abhängigen Ansprüchen angegeben.

Ein Vorteil des beschriebenen Verfahrens besteht darin, dass ein Trägermaterial in Form von zwei Rollen als Zuschnitte bereitgehalten wird, dass zwei Bahnen von dem Trägermaterial abgerollt und gleichzeitig auf die Platte beidseits aufgelegt und mit der Platte verklebt werden.

Auf diese Weise ist eine einfache Handhabung des Trägermaterials und ein kostengünstiges Verfahren zum Herstellen einer Trägerplatte bereitgestellt. Zudem erfolgt die Herstellung staub- und emissionsfrei.

In einer weiteren Ausführungsform wird eine Trägerplatte aus mehreren Bahnen hergestellt, wobei die Bahnen nacheinander mit dem Trägermaterial verklebt werden.

In einer weiteren Ausführungsform stellt das Trägermaterial ein Glasvlies, ein Glasgewebe oder Mischungen von Glasvlies mit Gelegen oder Folien oder Geweben dar, das mit einem Füllmaterial beschichtet oder getränkt ist.

In einer weiteren Ausführungsform weist das Glasvlies ein Flächengewicht zwischen 30g/m² und 200g/m² auf. Vorzugsweise werden als Füllstoff organische oder anorganische Materialien wie z.B. mineralische Füllstoffe, beispielsweise Kreide, Kaoline oder Schlacke, Glaskugeln oder Quarzsand verwendet. Der Füllstoff sollte so gewählt werden, um die gewünschte Rauhigkeit zu erhalten.

Das Füllmaterial weist ein Bindemittel auf, das zwischen 5% und 50% des Füllmaterials darstellt und vorzugsweise als organischer Binder ausgebildet ist. Auf diese Weise wird eine ausreichende Stabilität und zusätzlich eine ausreichende Flexibilität für das Bereitstellen des Trägermaterials in Form von Rollen ermöglicht.

Vorzugsweise weist das Trägermaterial eine Dicke im Bereich zwischen 0,3mm und 3mm auf. Auch dadurch wird die nötige Stabilität und die nötige Flexibilität des Trägermaterials ermöglicht.

Vorzugsweise wird das Trägermaterial mit flüssigen Füllmaterial, das das Bindemittel enthält, getränkt bzw. beschichtet und nach dem Abbinden zum Herstellen der Trägerplatte verwendet.

Die Erfindung wird im Folgenden anhand der Figuren näher erläutert. Es zeigen
Figur 1 eine schematische Darstellung einer Vorrichtung zur Herstellung einer Trägerplatte und
Figur 2 die Trägerplatte.

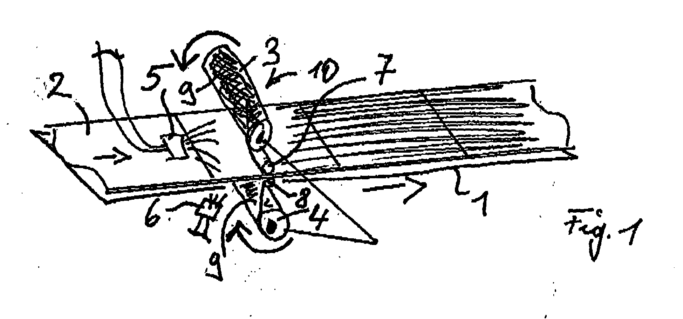

Figur 1 zeigt in der schematischen Darstellung ein Förderband 1, auf das Platten 2 aufgelegt werden. In der Figur 1 ist mit einer Pfeilrichtung die Bewegungsrichtung der Fertigungseinrichtung schematisch dargestellt. Zudem ist auf einer Oberseite eine erste Auftragsvorrichtung 5 und auf einer Unterseite eine zweite Auftragsvorrichtung 6 vorgesehen. Die erste und die zweite Auftragsvorrichtung 5, 6 dienen dazu, um Kleber 11 auf die Ober- und Unterseite der Platten 2 flächig aufzubringen. Als Klebematerial können beispielsweise Zementschlemme, PU-Kleber Hotmeltkleber, Dispersionen oder schnell härtende Bindemittel verwendet werden. Als Auftragsvorrichtung kann eine Walze, ein Sprühsystem oder Ähnliches verwendet werden.

Nach dem Aufbringen des Klebemittels bewegt das Förderband 1 die Platten 2 in Richtung auf eine Kaschierstation 10. Die Kaschierstation 10 weist als Andrucksystem eine erste Walze 3, mit Trägermaterial 9 auf der Oberseite und eine zweite Walze 4 mit Trägermaterial 9 auf der Unterseite des Förderbands 1 auf. Die erste und die zweite Walze 3, 4 stellen ein Auftragsystem dar. Anstelle der Walzen können auch Kufen verwendet werden. Als Trägermaterial 9 wird ein vorgefertigtes Trägermaterial verwendet, das mit Füllmaterial gefüllt ist und zumindest auf einer Seite eine gewünschte Rauhigkeit aufweist.

Das Trägermaterial kann aus einem Glasvlies und/oder einem Glasgewebe oder Mischungen aus Glasvlies mit Gelegen oder Folien oder Geweben bestehen, das ein Flächengewicht zwischen 30 und 2000g/m² aufweist. Vorzugsweise wird ein Glasvlies verwendet, das ein Flächengewicht zwischen 40 bis 100g/m², insbesondere zwischen 50 und 80g/m² aufweisen. Als Füllmaterial wird ein Bindemittel, insbesondere ein organisches Bindemittel verwendet. Zudem weist das Füllmaterial einen Füllstoff, beispielsweise organische oder anorganische Materialien wie z.B. mineralische Füllstoffe, beispielsweise Kreide oder Kaoline auf. Zudem kann Schlacke als Füllstoff, Glaskugeln oder Quarzsand verwendet werden. Die Körnung des Füllstoffes, insbesondere des Quarzsandes kann bei einem Durchmesser von beispielsweise 0,01 mm bis zu 1,5 mm liegen. Bei Verwendung eines Kunststoffbindemittels mit Verwendung eines Glasvlieses als Trägermaterial wird mit einer Körnung von 0,3 mm bis 0,5 mm eine Rauhigkeit an der Oberfläche erreicht, die sich gut zum Aufkleben von Fliesen eignet. Dadurch liegt keine alkalische Umgebung vor, die das Glasvlies angreifen könnte. Die Platte kann vorzugsweise aus Styropor bestehen.

Das Trägermaterial wird zwischen einer Bahn 2 und einer ersten bzw. einer zweiten Andruckwalze 7, 8 bzw. Andruckstation eingelegt und von den Andruckwalzen 7, 8 gegen die mit Kleber 11 versehene Oberfläche der Bahn 2 gedrückt. Die Andruckwalzen 7, 8 stellen ein Andrücksystem dar. Auf diese Weise wird das Trägermaterial 9 beidseitig auf die Platte 2 aufgebracht und mit der Platte 2 verklebt. Abhängig von der gewählten Ausführungsform kann anstelle der Platte 2 in Form eines Rollenmaterials auch die Platte in Form von einzelnen Zuschnitten zur Herstellung der Trägerplatte verwendet werden.

Abhängig von der gewählten Ausführungsform können die Ober- und Unterseite der Bahn 2 auch zeitlich nacheinander mit dem Trägermaterial verklebt werden. Vorzugsweise wird die Verklebung gleichzeitig an gegenüberliegenden Stellen der Platte 2 durchgeführt, da dadurch eine Verbiegung der Platte 2 durch einseitiges Verkleben vermieden wird. Die Platte 2 kann beispielsweise aus Polyurethan-Hartschaum, Phenolharz-Hartschaum oder Polysterol-Hartschaum bestehen.

Das Trägermaterial 9 weist vorzugsweise eine Dicke zwischen 0,4mm und 3mm auf. Im Trägermaterial 9 ist ein Füllmaterial mit einem Bindemittel und einem Füllstoff angeordnet.

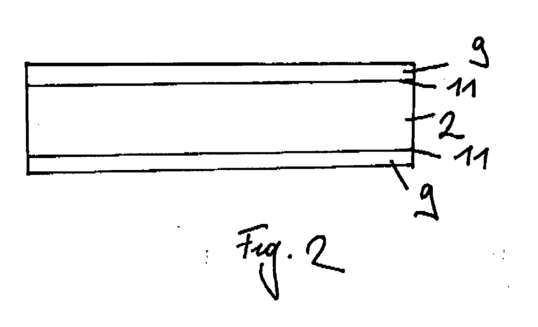

Die mit der Vorrichtung der Figur 1 hergestellte Trägerplatte ist schematisch in einem Querschnitt in Figur 2 dargestellt. Die Trägerplatte eignet sich beispielsweise als Untergrund für einen Wandputz oder als Untergrund zum Verkleben von Fliesen. Dazu weist die Trägerplatte auf der Ober- und Unterseite eine raue Oberfläche auf, auf der ein Wandputz oder ein Fliesenkleber gut haftet. Zudem kann die Trägerplatte aufgrund der rauen Oberfläche gut und einfach mit einer Wand verklebt werden.

Mit dem beschriebenen Verfahren ist eine kostengünstige Herstellung einer Trägerplatte mit verbesserten Eigenschaften möglich.

### Bezugszeichenliste

- 1: Förderband
- 2: Platte
- 3: 1. Rolle
- 4: 2. Rolle
- 5: 1. Sprühvorrichtung
- 6: 2. Sprühvorrichtung
- 7: 1. Andruckrolle
- 8: 2. Andruckrolle
- 9: Trägermaterial
- 10: Kaschierstation
- 11: Kleber

## Patentansprüche

1. Verfahren zum Herstellen einer Trägerplatte, insbesondere eine Trägerplatte für Fliesenkleber oder Wandputz, wobei eine Platte bereitgestellt wird, wobei zwei Rollen von Trägermaterial bereitgehalten werden, wobei zwei Bahnen von Trägermaterial von den zwei Rollen abgerollt werden, wobei die zwei Bahnen bzw. Zuschnitte insbesondere gleichzeitig auf die Platte beidseits aufgelegt und mit der Platte verklebt werden.

2. Verfahren nach Anspruch 1, wobei die Platte in Form einer Rollenware bereitgehalten wird.

3. Verfahren nach Anspruch 1, wobei die Platte in Form von Zuschnitten bereit gehalten werden und nacheinander beidseits mit den zwei Bahnen von Trägermaterial verklebt werden.

4. Verfahren nach einem der Ansprüche 1 bis 3, wobei das Trägermaterial ein mit Füllmaterial getränktes Glasvlies, Gelege und/oder Folie ist.

5. Verfahren nach einem der Ansprüche 1 bis 3, wobei das Trägermaterial ein mit Füllmaterial getränktes oder beschichtetes Glasgewebe ist.

6. Verfahren nach einem der Ansprüche 1 bis 5, wobei das Trägermaterial mit einem Füllmaterial gefüllt ist, wobei das Material ein Bindemittel und einen Füllstoff aufweist.

7. Verfahren nach einem der Ansprüche 1 bis 6, wobei das Trägermaterial ein Flächengewicht zwischen 30g/m2 und 2000g/m2 aufweist.

8. Verfahren nach einem der Ansprüche 6 oder 7, wobei der Füllstoff organische oder anorganische Füllstoffe, beispielsweise Glaskugeln, Quarzsand oder andere raue Schlacke aufweist.

9. Verfahren nach einem der Ansprüche 6 bis 8, wobei als Bindemittel ein organischer und/oder ein anorganischer Binder verwendet wird, wobei der Binder 4% bis 50% des Füllmaterials darstellt.

10. Verfahren nach einem der Ansprüche 1 bis 9, wobei als Binder Zementschlemme, PU-Kleber, Hotmeltkleber oder Dispersionskleber oder andere schnellbindende Materialien verwendet werden.

11. Verfahren nach einem der Ansprüche 1 bis 10, wobei das Trägermaterial eine Dicken im Bereich zwischen 0,4 mm und 3 mm aufweist.

12. Verfahren nach einem der Ansprüche 1 bis 11, wobei das Trägermaterial mit einem flüssigen Füllmaterial mit Bindemittel und Füllstoff gefüllt wird und nach dem Abbinden zum Herstellen der Trägerplatte verwendet wird.

13. Trägerplatte, die nach einem Verfahren der Ansprüche 1 bis 12 hergestellt ist.

14. Trägerplatte mit beidseits verklebten Trägermaterial, wobei das Füllmaterial Bindemittel und organische oder anorganische Füllstoffe aufweist.
